# EUROPEAN PATENT APPLICATION

(11) **EP 1 659 786 A2**
(43) Date of publication of application: **24.05.2006**
(21) Application number: 05257123.9
(22) Date of filing: 18.11.2005
(51) Int. Cl.: H04N 5/44

(54) **Video apparatus software upgrading**

(30) Priority: 19.11.2004 KR 2004095340; 24.02.2005 KR 2005015489; 31.05.2005 KR 2005045899
(71) Applicant: LG Electronics Inc., Yongdungpo-gu Seoul (KR)
(72) Inventor: Kim, Young Min, Gumi Si, Gyeongsangbuk-Do (KR); Kim, Ick Hwan, Gumi-si, Gyeongsangbuk-do (KR); Hur, Hyun, Busan (KR)
(74) Representative: Camp, Ronald

(57) **Abstract**

In a video apparatus with a software upgrade function and a method for controlling the same, software of the video apparatus can be downloaded through the use of a broadcast signal and the existing software of the video apparatus can be upgraded with the downloaded software, and software of a version desired by the user can be selected as needed. The video apparatus includes a tuner for receiving software of the video apparatus sent from a broadcast transmitting station, a controller for detecting the software of the video apparatus, downloading the detected software to a memory and upgrading the video apparatus with the downloaded software, and the memory adapted for storing the downloaded software under control of the controller.

## Description

The present invention relates to a video apparatus and a method for controlling the same. It more particularly relates to a video apparatus with a software upgrade function and a method for controlling the same, wherein software of the video apparatus can be downloaded through the use of a broadcast signal and the existing software of the video apparatus can be upgraded with the downloaded software, and software of a version desired by the user can be selected as needed.

Nowadays, televisions (TVs) on the market have a variety of functions suitable for an age of multimedia. It is also possible to improve performance of software associated with a system of such a TV and provide additional functions in the TV system, unlike older traditional TVs. To this end, there is an increasing need for upgrade of software associated with the TV system.

Meanwhile, various programs related to the entire operation of the above-mentioned TV are stored in a flash memory contained in the TV, so that the TV operation can be controlled by the stored programs. For improvement in performance of the stored programs and provision of additional functions in the TV system, it is necessary to upgrade the stored programs with a newer version of software.

In more detail, in order to perform a software upgrade for provision of a new service function or change or improvement in an existing service function, it is necessary to additionally store new software in the memory or replace existing software stored in the memory with a newer version of software.

However, for upgrade of software associated with the TV system, in the prior art, the user must personally visit a designated service center or TV maker while carrying the TV, or the service staff of the service center must personally visit the user's home, resulting in considerable inconvenience.

On the other hand, for upgrade of software associated with the TV system, in the prior art, the user may manually connect the TV with a personal computer and operate the personal computer to download a newer version of software associated with the TV system through the personal computer. In this case, however, there is a limitation that a personal computer must be used.

In an Over Air Download (OAD) method for extracting specific software associated with the TV system, contained in a broadcast signal, and upgrading existing software associated with the TV system with the extracted specific software, the user has to memorize a frequency channel over which the specific software is sent, otherwise, he/she cannot download the specific software to the TV and upgrade the TV with the specific software.

In addition, in the case where the channel over which the specific software associated with the TV system can be downloaded is changed due to, for example, a modification in convention between a TV software (S/W) maker and a broadcasting station, the user has difficulty in recognizing the changed channel in a separate manner, so he/she cannot download the desired S/W.

In the prior art, there is no method for pre-notifying the user of information regarding each version of S/W associated with the TV system, sent over a specific channel. Further, once S/W is upgraded, it cannot be restored to the previous S/W. For this reason, where a fatal error occurs in the upgraded S/W, there is no choice but to continuously use the S/W with the fatal error until a newer version of S/W capable of solving the fatal error is provided.

For example, where the upgraded S/W has the same function as that of the previous version of S/W, with the exception of only changes in menu color and configuration, the user must use the upgraded S/W continuously even though he/she prefers the previous version of S/W to the upgraded S/W. This may result in user dissatisfaction.

The present invention seeks to provide an improved video apparatus and method having a software upgrade function.

A basic principle underlying the present invention is, if a broadcasting station sends TV system upgrade data, to receive the TV system upgrade data through a tuner in a TV and to provide the received data to the user, thereby having the effect of conveniently upgrading software (S/W) associated with the TV system.

Recently, according to the trend of digitization being rapidly developed, standardizations of TV broadcasting have been actively made and ones beginning detailed services have emerged from the standardizations. Particularly, in Europe, projects related to digital TV broadcasting are in progress by countries and regions since terrestrial digital high definition television (HDTV) broadcasting, called High Definition - Digital Video Narrow-band Emission (HD-DIVINE), appeared for the first time at the International Broadcasting Convention (IBC), which is Europe's biggest broadcasting trade show.

Digital broadcasting can provide excellent picture quality and sound quality compared with current analog broadcasting, resulting in a need for development of a digital television to meet such high requirements.

Therefore, in order to make provisions for the digital broadcasting, many companies are developing a method for upgrading system software such that conventional TVs can receive the digital broadcasting and data broadcasting.

In a first aspect of the invention, a method for performing software upgrade of a video apparatus, comprises the steps of: receiving a software upgrade instruction from a user; downloading software associated with operation of the video apparatus from a broadcast station in response to the received instruction; and upgrading the video apparatus by executing the downloaded software.

In another aspect of the present invention, there is provided a video apparatus having software upgrade capability, comprising: a tuner for receiving software associated with operation of a video apparatus from a broadcast station; a controller for detecting the software from a broadcast signal, downloading the detected software, and upgrading the video apparatus by executing the downloaded software; and a memory for storing the downloaded software under control of the controller.

In a further aspect of the present invention, there is provided a method for performing software upgrade of a video apparatus, comprising the steps of: detecting electronic program guide (EPG) information sent from a broadcast station and storing the detected EPG information in a memory of the video apparatus; displaying a EPG based on the EPG information, the EPG indicating a channel over which software associated with operation of the video apparatus is scheduled to be sent; and downloading, to the memory, software of a version selected by a user from the displayed EPG, and upgrading the video apparatus by executing the downloaded software.

In a further aspect of the present invention, there is provided a video apparatus having software upgrade capability, comprising: a tuner for receiving a broadcast signal having a predetermined frequency; a memory for storing EPG information contained in the broadcast signal received by the tuner, the EPG information indicating a channel over which software of the video apparatus is scheduled to be sent; a display unit for displaying an EPG based on the EPG information stored in the memory; and a controller for extracting the EPG information from the broadcast signal, storing the extracted EPG information in the memory, and downloading and installing specific software selected by a user from the displayed EPG.

In another aspect of the present invention, there is provided a method for performing software upgrade of a video apparatus, comprising the steps of: receiving a software upgrade instruction; in response to the received instruction, sequentially searching a plurality of valid channels to detect, from among the valid channels, a channel over which a transport stream containing the same information as a maker name and model name of the video apparatus, pre-stored in a memory of the video apparatus, is received; if the channel over which the transport stream containing the same information as the maker name and model name pre-stored in the memory is received is detected, downloading software contained in the transport stream received over the detected channel; and upgrading the video apparatus with the downloaded software.

In yet another aspect of the present invention, there is provided a video apparatus with a software upgrade function, comprising: a tuner for receiving software of the video apparatus sent from a broadcast transmitting station; a controller for controlling the tuner to sequentially tune to a plurality of valid channels so as to detect, from among the valid channels, a channel over which a transport stream containing the same information as a maker name and model name of the video apparatus, pre-stored in a memory of the video apparatus, is received, and, if the channel over which the transport stream containing the same information as the maker name and model name pre-stored in the memory is received is detected, downloading software contained in the transport stream received over the detected channel to the memory; and the memory adapted for storing the downloaded software under control of the controller.

It is to be understood that both the foregoing general description and the following detailed description of the present invention are exemplary and explanatory and are intended to provide further explanation of the invention as claimed.

Embodiments of the invention will now be described by way of non-limiting example only, with reference to the drawings, in which:-

FIG. 1 is a block diagram showing a first embodiment of a video apparatus with a software upgrade function according to the present invention;

FIG. 2 is a flow chart illustrating a first embodiment of a method for controlling the video apparatus with the software upgrade function according to the present invention;

FIG. 3 is a block diagram showing a second embodiment of the video apparatus with the software upgrade function according to the present invention;

FIG. 4 is a flow chart illustrating a second embodiment of the method for controlling the video apparatus with the software upgrade function according to the present invention;

FIG. 5 is a table showing the structure of a transport stream associated with software of the video apparatus according to the present invention;

FIG. 6 is a flow chart illustrating a third embodiment of the method for controlling the video apparatus with the software upgrade function according to the present invention;

FIG. 7 is a flow chart illustrating a fourth embodiment of the method for controlling the video apparatus with the software upgrade function according to the present invention;

FIG. 8A is a view showing a first embodiment of an electronic program guide screen according to the present invention; and

FIG. 8B is a view showing a second embodiment of the electronic program guide screen according to the present invention.

Wherever possible, the same reference numbers will be used throughout the drawings to refer to the same or like parts.

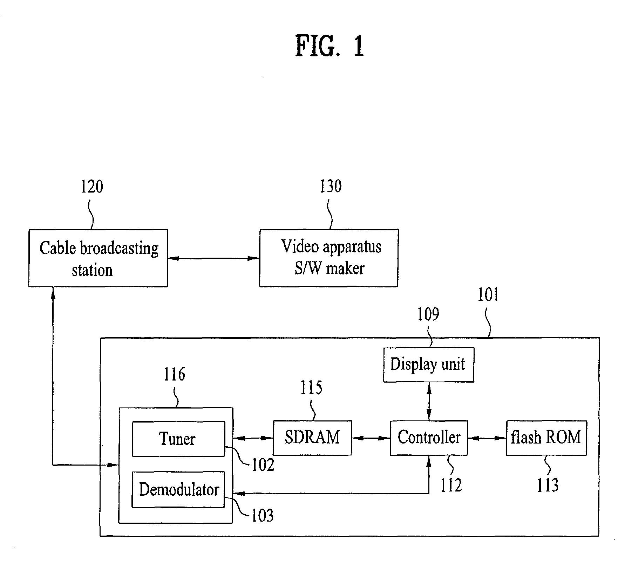

Referring now to FIG. 1, a system for upgrading software associated with a system of the video apparatus, for example, a television (TV) receiver includes a video apparatus software (S/W) maker 130 providing upgrade information regarding the video apparatus, a cable broadcasting station 120 for sending the system upgrade information associated with operation of the video apparatus to the video apparatus, which is, denoted by the reference numeral 101. The video apparatus 101 is connected with the cable broadcasting station 120 through a cable line.

The video apparatus 101 includes a receiver 116 for receiving a broadcast signal containing software upgrade information associated with operation the video apparatus system, sent from the cable broadcasting station 120, a controller 112 for controlling various components and functions of the video apparatus 101, a display unit 109 for outputting a video apparatus signal, a flash read only memory (ROM) 113 which is an internal memory of the video apparatus 101, and a synchronous dynamic random access memory (SDRAM) 115 for supporting operation of the controller 112. The receiver 116 also acts to receive data representing a newer version of system software through the cable.

In more detail, the receiver 116 includes a tuner 102 and a demodulator 103.

The tuner 102 is mainly used in an input unit of a wireless receiver. It refers to a device that is composed of a combination of suitable inductors and capacitors to tune to a frequency of desired electric waves (or electric signal) so as to select and extract only the desired electric waves. Generally, the tuner may tune to various frequencies by employing one or both of the inductor and capacitor as variable elements or changing the combination thereof.

For example, in a radio receiver, the tuner can receive signals over all broadcasting frequencies by employing a varicon (variable condenser). In a television receiver, the tuner includes an antenna input unit and intermediate frequency converter integral with each other and an electrical shield therebetween. It is common usage that the expression "tuner" often (but not invariably) refers to a device for the television receiver rather than the radio receiver.

The demodulator 103 functions to restore a signal received in data communication to the original signal. In communications, a modulated wave of video or audio signal is transmitted by being used to modify a radio-frequency wave (carrier wave), which is a fundamental wave. In a receiver, the modulated wave is detected from radio-frequency current and then restored to the original signal, which is called demodulation.

In the case of amplitude modulation, demodulation is performed by a rectifier and other nonlinear circuits. In the case of frequency modulation or phase modulation, demodulation is performed by a combination of a frequency discriminator, and a demodulator for amplitude modulation.

For example, in order to transmit a digital signal processed in a computer over an analog transmission line, such as a telephone line, it is necessary to change (modulate) the digital signal into an analog signal to be processed by a telephone network and transmit the converted analog signal. A receiving computer has to receive the transmitted analog signal and restore (demodulate) the received analog signal to the original digital signal. A device for performing this operation is called a modulator/demodulator, or modem.

The controller 112 may be, for example, a central processing unit (CPU). The CPU is composed of an arithmetic logic unit (ALU) for carrying out comparisons, determinations and logical operations, and a control unit for carrying out interpretation and execution of instructions. The ALU includes an adder for performing additions, an accumulator which is a register for temporarily storing results of arithmetic and logical operations, and a register which is a temporary memory of the CPU.

The control unit includes a program counter for controlling a program sequence, an instruction register for temporarily storing the contents of an instruction being currently executed, and an instruction decoder for decoding the instruction contents stored in the instruction register and sending the resulting control signal to an associated device.

The display unit 109 acts to externally output a video signal or audio signal transferred from the controller 112. A plasma display panel (PDP) may be used for the display unit 109. The PDP is an emissive display which uses light emitted in accordance with coupling of plasma and phosphors.

The PDP, which realizes a super-precision large-size screen, is a next-generation image reproduction system substitutable for cathode Ray tubes or liquid crystal TVs. Such a PDP includes a group of fine phosphors to form a screen. In detail, two glass substrates, on which transparent electrodes are arranged in parallel, are overlapped such that a gap of about 0.1 mm is defined between the glass substrates. A rarefied gas is charged in the gap between the glass substrates. When a voltage is applied to the transparent electrodes, electric discharge occurs, thereby causing ultraviolet radiation to be generated. The phosphors emit light by virtue of the ultraviolet radiation. The phosphors include red/green/blue (R/G/B) phosphor cells which are isolated by partitions. In accordance with light emission of the phosphors, it is possible to reproduce all colors.

In the PDP system, electric discharge occurs in individual cells to cause associated phosphors to emit visible light. Accordingly, the PDP system has a reduced thickness as compared to the cathode ray tube system. Also, the PDP system has a viewing angle wider than that of the Brown cathode ray tube system by about 2.7 times. In particular, the PDP system can achieve a complete flatness of 100%, so that it is possible to distinctly display a bright image over the entire region of the screen without any distortion.

The SDRAM 115 refers to a DRAM which has a clock speed in synchronization with that of the microprocessor. The synchronization of the clock speed is of help to increase the number of instructions that the microprocessor can execute within a given time.

The speed of the SDRAM is conventionally expressed in MHz, not nano second, thereby making it easier to compare a bus speed and a RAM chip speed with each other.

The flash ROM 113 is a nonvolatile memory in which stored data is not erased even though power is not supplied to the memory.

The term "flash" in the flash ROM means that data can be very conveniently written/erased in the memory. The flash ROM is applicable to various mobile products, including a digital camera, because it is more convenient to use, more stable, higher in speed, larger in capacity and lower in cost than other types of memories.

Codes for operating the controller 112 can be downloaded to the flash ROM 113 and a part of the contents in the flash ROM 113 can be stored in a memory card. As a result, data can be read from the memory card and then stored in the flash ROM 113, and the stored data can be outputted from the flash ROM 113. Various options to be set by the user can also be stored in the flash memory 113.

A description will hereinafter be given of the operation of the system for upgrading software associated with the video apparatus system, constructed as stated above.

The video apparatus S/W maker 130 shown in FIG.1 provides S/W for upgrade of the operation of the video apparatus 101 or for addition of other functions in the video apparatus 101 whenever the S/W is developed. For example, the video apparatus S/W maker 130 may provide the S/W for update to the cable broadcasting station 120 in a wired or wireless communication manner.

The cable broadcasting station 120 broadcasts the S/W update data through a cable. At this time, upon recognizing that a newer version of S/W associated with the operation of the video apparatus 101 is present in data broadcasting while watching the data broadcasting through the display unit 109, the user may input a download instruction through the display unit 109(eg. a user interface unit).

If the user selects the download and upgrade of the newer version of S/W associated with the operation of the video apparatus 101 by operating the display unit 109, the video apparatus 101 is connected with a server of the cable broadcasting station 120, which is in turn connected with a server of the video apparatus S/W maker 130 in a wired/wireless manner.

The video apparatus 101 downloads the newer version of system S/W from the server of the cable broadcasting station 120 which is linked with the server of the video apparatus S/W maker 130 to hold the S/W associated with the video apparatus 101. The video apparatus 101 then stores the downloaded S/W in the flash ROM 113 thereof.

In detail, if the download of the newer version of system software of the video apparatus 101 from the cable broadcasting station 120 is completed, the controller 112 in the video apparatus 101 deletes the existing system S/W stored in the flash ROM 113 and then stores the downloaded system S/W in the flash ROM 113. In more detail, the controller 112 may download the newer version of system S/W from the cable broadcasting station 120 using a trivial file transfer protocol (TFTP), which is a kind of application protocol used for transmission and reception of system file information, temporarily store the downloaded system S/W in the SDRAM 115 and then store it in the flash ROM 113. In this manner, the system S/W upgrade is carried out.

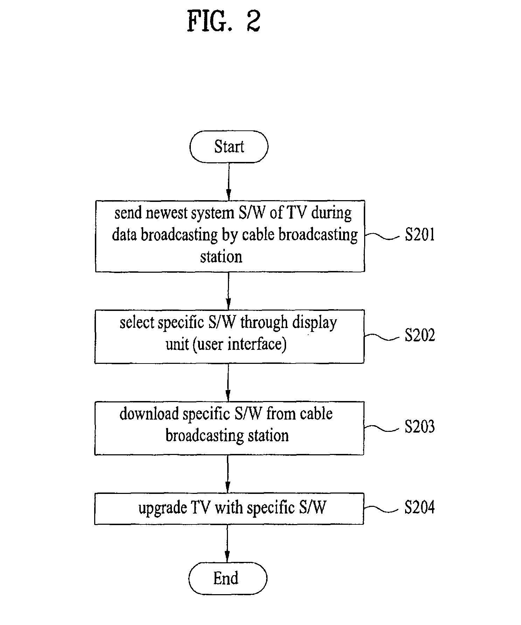

A first embodiment of a method for controlling a video apparatus having the software upgrade capability will now be described with reference to Figure 2.

First, a cable broadcasting station 120 sends a newer version of S/W associated with the operation of video apparatus 101, for example, a television (TV) receiver, during data broadcasting (S201).

During data broadcasting containing newer system S/W upgrade information, the user inputs an instruction for selection of specific system S/W upgrade of the video apparatus 101 by operating the display unit 109 (S202).

If the selection is made, during the data broadcasting (S202), the controller 112 controls the receiver 116 to download the newer version of system S/W from the cable broadcasting station 120 (S203).

The controller 112 deletes the existing system S/W stored in the flash ROM 113 and then stores the downloaded system S/W in the flash ROM 113 to upgrade the existing system S/W with the newest version of system S/W (S204).

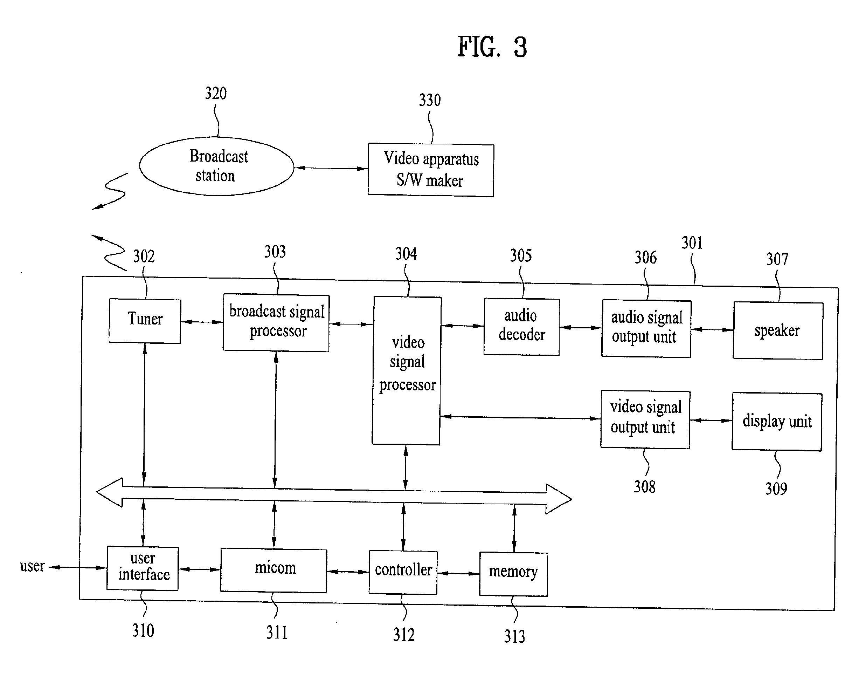

A second embodiment of a video apparatus having software upgrade capability will now be described with reference to figure 3.

A video apparatus 301, for example, TV includes a video apparatus S/W maker 330 providing system upgrade software associated with operation of the video apparatus 301, and a broadcast station 320 for sending the upgrade information to the video apparatus 301. The broadcast station 320 may be, for example, a terrestrial or satellite broadcasting station. As compared with the first embodiment of FIG. 1, the second embodiment is characterized in that no separate cable is required.

Satellite communication is communication between earth stations or teleports using earth-orbiting satellites. The super high frequency (SHF) band is mainly used to provide various communication services and broadcasting services.

Satellite communication has the advantages of wide bandwidth, mass communication, low communication cost and high line quality.

The video apparatus 301 includes a tuner 302, broadcast signal processor 303, video signal processor 304, audio decoder 305, audio signal output unit 306, video signal output unit 306, speaker 307, display unit 309, user interface 310, microcomputer(micom) 311, controller 312, and memory 313.

The video apparatus 301 may include a receiver or set-top box capable of receiving a terrestrial or satellite broadcast signal.

The controller 312 not only controls the entire operation of the video apparatus 301, but also performs S/W upgrade according to the present embodiment.

The memory 313 stores various information including a control program of the controller 312. In particular, the memory 313 stores information about the maker name, model name and S/W version of the video apparatus 301 according to the present embodiment.

The microcomputer 311 provides the user's various instructions or information, inputted through the user interface 310, to the controller 312.

The user interface 310 receives the user's various instructions or information through a keypad or remote controller and provides the instructions or information to the microcomputer 311.

The tuner 302 tunes to a broadcast signal of a specific channel, among broadcast signals, under the control of the controller 312 and provides the tuned broadcast signal to the broadcast signal processor 303.

The broadcast signal processor 303 decodes the tuned broadcast signal into transport streams (TS) and provides the decoded TSs to the video signal processor 304.

The video signal processor 304 decodes the TSs provided from the broadcast signal processor 303 into audio streams, video streams and data streams under the control of the controller 312. The video signal processor 304 also decodes the video stream into video data and outputs the decoded video data to the display unit 309 through the video signal output unit 308. To this end, the video signal processor 304 includes a TS decoder and a video decoder. The video signal output unit 308 also receives on-screen display (OSD) data and outputs the received OSD data to the display unit 309, under the control of the controller 312.

The video signal processor 304 also provides the audio streams to the audio decoder 305. The audio decoder 305 decodes the audio streams into audio data and outputs the decoded audio data to the speaker 307 through the audio signal output unit 306.

The video signal processor 304 further provides the data streams to the controller 312. These data streams may contain TSs associated with system upgrade S/W associated with operation of the video apparatus 301.

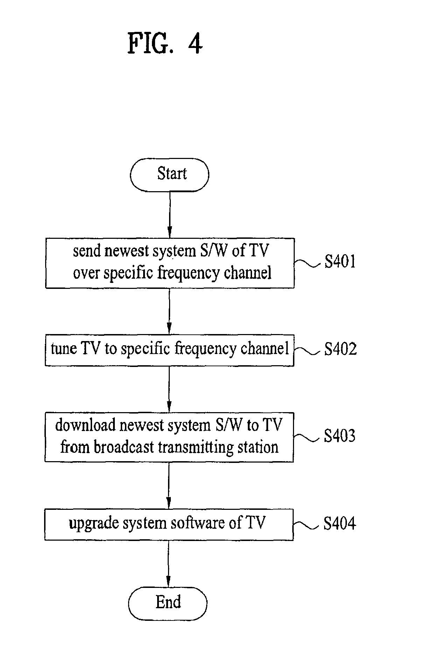

The operation for upgrading software associated with the video apparatus 301, shown in FIG. 3, will hereinafter be described with reference to FIG. 4.

A video apparatus S/W maker 330 provides S/W for upgrade of operation of the video apparatus 301 or addition of other functions in the video apparatus 301 to the broadcast station 320 whenever the S/W is developed. For example, the video apparatus S/W maker 330 may provide the S/W to the broadcast station 320 in a wired or wireless communication manner.

The broadcast station 320 may be, for example, a terrestrial or satellite broadcasting station.

The broadcast station 320 sends a transport streams (TSs) associated with system upgrade S/W of the video apparatus 301 using a specific terrestrial or satellite channel (S401).

The channel over which the TSs are sent may be preset or set to be changed as needed. One or more channels may be set for the sending of the TSs associated with the system S/W of the video apparatus 301.

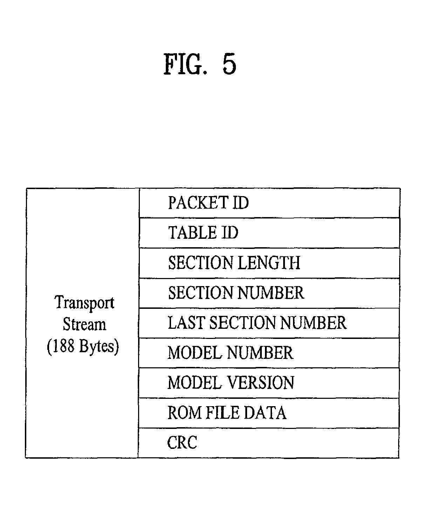

A description will hereinafter be given of a data format of the S/W associated with the video apparatus which is sent from the broadcast station to the video apparatus, with reference to FIG. 5.

As shown in FIG. 5, a TS includes a packet ID, table ID, section length, section number, last section number, model name, model version, ROM file data, and CRC. In particular, the packet ID contains information indicating a maker name, model name and S/W version.

Referring back to FIG. 4, the tuner 302 tunes to the specific channel over which the S/W-associated TSs are sent, under the control of the controller 312 (S402).

The memory 313 stores the S/W-associated TSs transferred from the tuner 302 under the control of the controller 312 (S403).

Then, the controller 312 deletes the existing S/W stored in the memory 313 and upgrades the video apparatus 301 with the newest version of S/W stored in the memory 313 (S404).

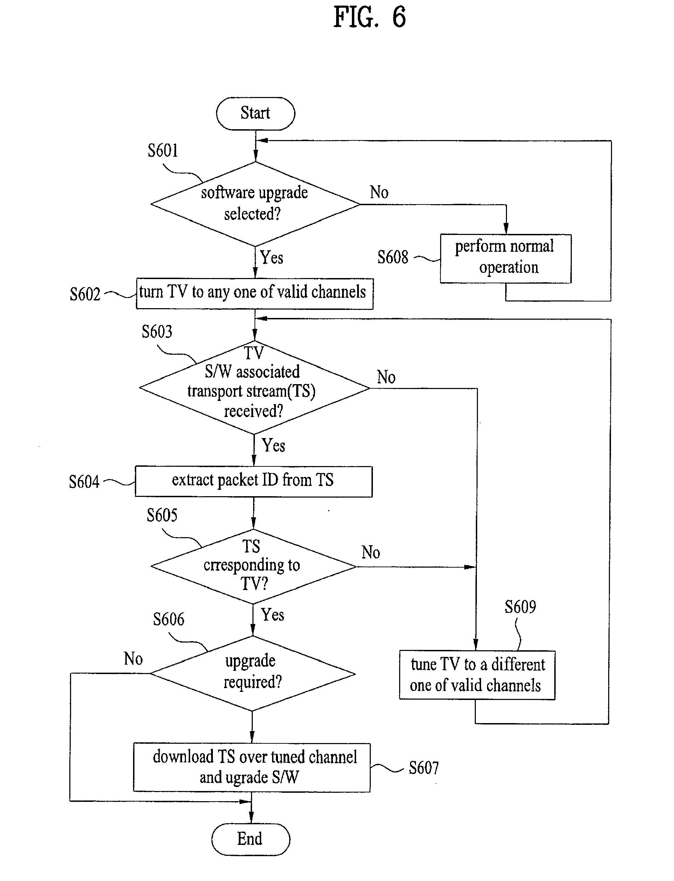

Another method for upgrading S/W in the video apparatus 101 or 301 will hereinafter be described with reference to FIG. 6.

As compared with the embodiments of FIGs. 2 and 4, the embodiment of FIG. 6 is advantageous in that there is no need to separately tune to a specific frequency channel over which video apparatus system S/W is sent.

The cable broadcasting station 120 or broadcast transmitting station 320 sends specific system upgrade S/W in the form of TSs shown in FIG. 5 in response to a request of the video apparatus S/W maker 130 or 330. It should be noted here that, because there are many companies manufacturing video apparatuses, the broadcast station will send S/W of a different video apparatus over every channel.

Particularly, the broadcast station 320 may send system upgrade S/W to the video apparatus 301 in an Over Air Download (OAD) manner.

In other words, TSs of the S/W associated with the video apparatus system may be sent in the OAD manner.

The controller 112 or 312 determines whether an instruction to download the TSs and to upgrade S/W with the received TS has been inputted through the display unit 109 or user interface 310 (S601).

If the controller 112 or 312 determines at step S601 that the instruction has not been inputted, the video apparatus 101 or 301 performs the normal operation (S608).

On the other hand, upon determining at step S601 that the instruction has been inputted, the controller 112 or 312 controls the tuner 102 or 302 to tune to any one of a plurality of valid channels (S602).

The controller 112 or 312 then determines whether the TS associated with the system upgrade S/W are received over the tuned channel (S603).

If it is determined at step S603 that the TS is not received, the controller 112 or 312 controls the tuner 102 or 302 to tune to a different one of the valid channels (S609), and then returns to step S603 to determine whether the TS is received over the tuned channel.

Where the TS is determined to be received at step S603, the controller 112 or 312 extracts a packet ID from the received TS (S604).

Here, the TS includes, as shown in FIG. 5, a packet ID, table ID, section length, section number, last section number, model name, model version, ROM file data, and CRC. In particular, the packet ID contains information about a maker name, model name and S/W version.

If the maker and model information contained in the packet ID of the video apparatus system S/W-associated TS received over the currently tuned channel is the same as that contained in software information stored in the memory 313 or flash ROM 113, the controller 112 or 312 determines that the received TS corresponds to the video apparatus 101 or 301 (S605).

If it is determined at step S605 that the received TS does not correspond to the video apparatus 101 or 301, the controller 112 or 312 controls the tuner 102 or 302 to tune to a different one of the valid channels (S609), and then performs steps S603, S604 and S605 again to check a channel over which the TS corresponding to the video apparatus 101 or 301 is broadcast.

By repeating the above steps S603, S604, S605 and S609, the controller 112 or 312 can detect a channel over which the TS corresponding to the video apparatus 101 or 301 is broadcast.

In the case where the received TS is determined to correspond to the video apparatus 101 or 301 at step S605, the controller 112 or 312 extracts software version information contained in the packet ID of the TS and determines whether the extracted software version information is different from software version information stored in the memory 313 or flash ROM 113 (S606).

If the extracted software version information is determined to be the same as the software version information stored in the memory 313 or flash ROM 113 at step S606, the controller 112 or 312 ends this operation, because there is no need for upgrading the S/W.

On the other hand, upon determining at step S606 that the extracted software version information is different from the software version information stored in the memory 313 or flash ROM 113, the controller 112 or 312 recognizes that the upgrade of the S/W is required, and thus downloads the TS broadcast over the tuned channel to the memory 313 or flash ROM 113 and upgrades the S/W with the downloaded TS (S607).

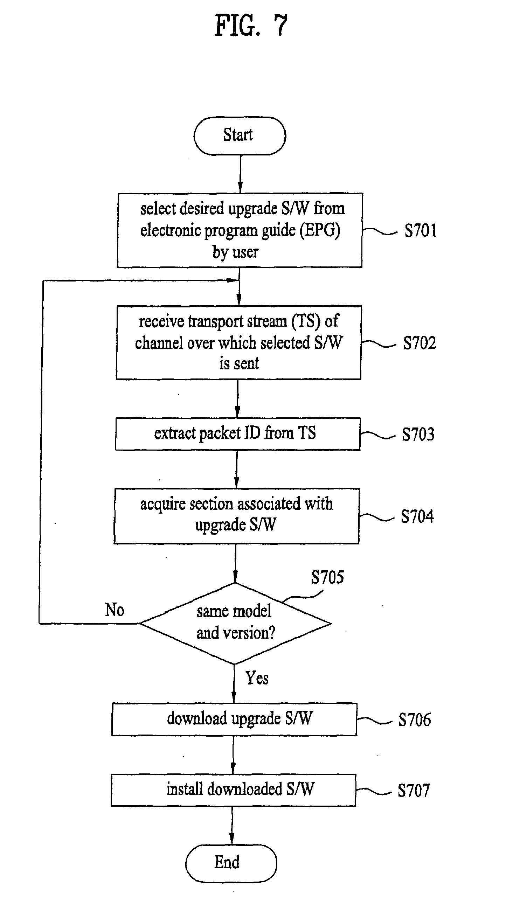

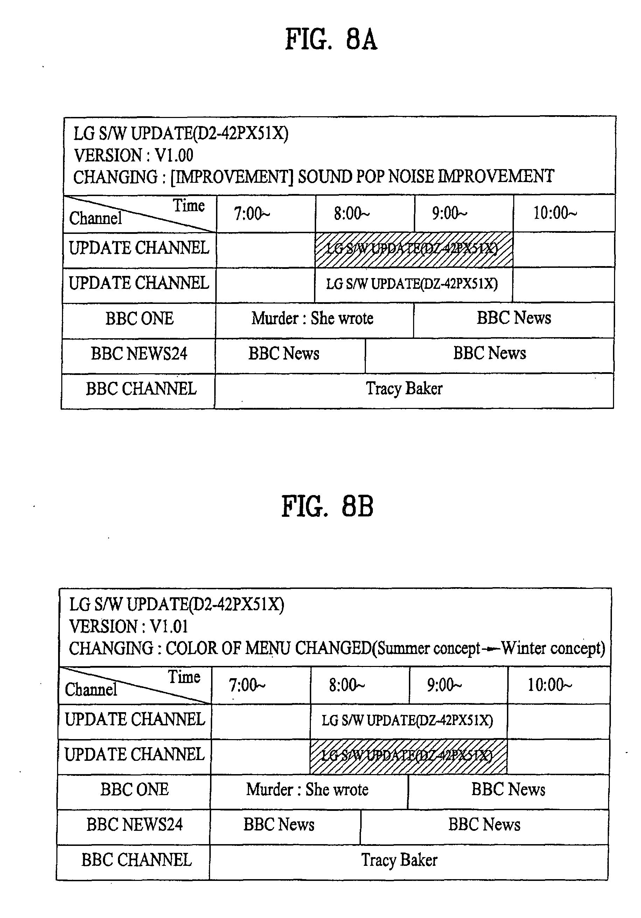

Another method for upgrading S/W in the video apparatus 101 or 301 will hereinafter be described with reference to FIGs. 7, 8A and 8B.

In the fourth embodiment, features of the video apparatus system S/W have been upgraded are pre-notified to the user through the use of EPG information, so that the user can download and use the newly upgraded S/W, or use the existing S/W as it is before being upgraded.

The cable broadcasting station 120 or broadcast station 320 sends a program of each version of the SW associated with the video apparatus system over a specific channel.

The cable broadcasting station 120 or broadcast station 320 includes, in EPG information, a channel and time at which the program of each version is sent, and information about changes between the program of each version and the program of the previous version (for example, a menu color, function, configuration, etc.).

For example, the cable broadcasting station 120 or broadcast transmitting station 320 may send, to the video apparatus 101 or 301, EPG data including information regarding an improvement in sound pop noise, as shown in FIG. 8A, or an EPG data including information regarding a change in menu color, as shown in FIG. 8B.

The controller 112 or 312 of the video apparatus 101 or 301 extracts EPG information including one or more channels and times at which a program of each version of the SW associated with the video apparatus system is sent, and information about changes between the program of each version and the program of the previous version through the broadcast signal processor 303 or demodulator 103, and stores the extracted EPG information in the memory 313 or flash ROM 113.

Thereafter, if an EPG output instruction is inputted through the user interface 310 or display unit 109, the controller 112 or 312 recognizes the inputted instruction, reads the EPG information from the memory 313 or flash ROM 113, and then displays the EPG as shown in FIG. 8A or 8B.

In detail, the EPG shown in FIG. 8A or 8B includes the channels and times at which the program of each version is or will be sent. If the user selects any one of the programs of the displayed screen through the user interface 310 or display unit 109, the controller 112 or 312 displays, on an upper portion of the screen, information about changes of the program of the selected version, namely, a function improvement or changes in menu color, function, configuration, etc.

Then, the user selects a desired version of S/W to be downloaded to the video apparatus 101 or 301 on the EPG through the user interface 310 or display unit 109 (S701).

The controller 112 or 312 controls the tuner 102 or 302 to tune to a channel over which the selected S/W is sent, and then receives TSs sent over the tuned channel through the broadcast signal processor 303 or demodulator 103 (S702).

Then, the controller 112 or 312 extracts a packet ID (PID) from the TS received through the broadcast signal processor 303 or demodulator 103 (S703).

The controller 112 or 312 acquires section information associated with the system upgrade S/W using the extracted PID (S704).

Then, the controller 112 or 312 determines whether model and version information contained in the acquired section information is the same as model and version information of the S/W selected on the EPG screen by the user (S705).

Upon determining at step S705 that the model and version information contained in the acquired section information is not the same as the model and version information of the selected S/W, the controller 112 or 312 returns to step S702.

On the other hand, if the model and version information contained in the acquired section information is determined to be the same as the model and version information of the selected S/W at step S705, the controller 112 or 312 downloads data of the selected S/W to the memory 313 or flash ROM 113 (S706).

The controller 112 or 312 executes the downloaded S/W in the video apparatus 101 or 301 (S707).

For example, the controller 112 or 312 may decompress the data of the downloaded S/W and write it in a predetermined specific memory area.

In the fourth embodiment, the S/W download instruction and the S/W installation have been disclosed to be successively executed for illustrative purposes. Alternatively, a reserved installation may be performed in which the S/W installation is executed at a certain term after the S/W download instruction is executed.

For example, if the user reserves a desired version of S/W associated with the video apparatus system on the EPG screen for installation thereof, the controller 112 or 312 waits until a sending time of the reserved S/W is reached, and then downloads and installs the S/W in the memory 313 or flash ROM 113 at the sending time.

Meanwhile, when the video apparatus 101 or 301 is in operation, for example, when it outputs a different screen, the controller 112 or 312 outputs, to the display unit 109 or 309, a message asking the user whether to install the reserved S/W, and then executes the S/W download and installation according to the user's confirm signal inputted through the user interface 310 or display unit 109.

On the other hand, when the video apparatus 101 or 301 is in a standby mode, the controller 112 or 312 executes the reserved S/W download and installation at once without the user's confirmation.

As apparent from the above description, the present invention provides a video apparatus with a software upgrade function and a method for controlling the same, wherein, because a broadcasting station sends data of software associated with a system of the video apparatus along with a general broadcast signal, the software can be readily downloaded and installed through the use of only the video apparatus, without using a separate personal computer, so that the video apparatus can be upgraded with the downloaded software.

Further, the video apparatus can automatically detect a satellite or terrestrial frequency channel on which the software can be downloaded, resulting in considerable convenience to the user.

Furthermore, the video apparatus can selectively download and install software of a version desired by the user as needed.

It will be apparent to those skilled in the art that various modifications and variations can be made in the present invention without departing from the scope of the invention. Thus, it is intended that the present invention covers the modifications and variations of this invention provided they come within the scope of the claims and their equivalents.

## Claims

1. A method for performing software upgrade of a video apparatus, the method comprising:
receiving a software upgrade instruction from a user;
downloading software associated with operation of the video apparatus from a broadcast station in response to the received instruction; and
upgrading the video apparatus by executing the downloaded software.

2. The method as set forth in claim 1, wherein, when the broadcast transmitting station is a cable broadcasting station, the software is downloaded through a pre-installed cable.

3. The method as set forth in claim 1, wherein, when the broadcast transmitting station is a terrestrial or satellite broadcasting station, the software is downloaded over a specific terrestrial or satellite broadcasting channel.

4. The method as set forth in claim 1, wherein, the broadcast station receives the software provided from a video apparatus manufacturer.

5. The method as set forth in claim 1, wherein the downloading software comprises:
sequentially searching a plurality of valid channels to detect, from among the valid channels, a channel over which at least one transport stream containing the same information as a maker name and model name of the video apparatus, pre-stored in a memory of the video apparatus, is received; and
if the channel is detected, downloading software contained in the transport stream received over the detected channel.

6. The method as set forth in claim 5, wherein the downloading software further comprises downloading the software contained in the received transport stream only when a software version of the received transport stream is different from a software version pre-stored in the memory of the video apparatus.

7. The method as set forth in claim 1, wherein the receiving a software upgrade instruction comprises:
displaying electronic program guide (EPG) indicating a channel over which the software of the video apparatus is scheduled to be sent; and
selecting a software version by a user using the displayed EPG information.

8. The method as set forth in claim 7, wherein the EPG contains a number of the channel over which the software of the video apparatus is sent, a time at which the software of the video apparatus is sent, and information indicating changes in the software of the video apparatus.

9. The method as set forth in any preceding claim, wherein the software is downloaded in the form of at least one transport stream having a packet identifier, the packet identifier indicating a maker name, model name and software version of the video apparatus.

10. A video apparatus having software upgrade capability, comprising:
a tuner for receiving software associated with operation of a video apparatus from a broadcast station;
a controller for detecting the software from a broadcast signal, downloading the detected software, and upgrading the video apparatus by executing the downloaded software; and
a memory for storing the downloaded software under control of the controller.

11. The video apparatus as set forth in claim 10, wherein the tuner comprises means to download the software through a pre-installed cable when the broadcast station is a cable broadcasting station.

12. The video apparatus as set forth in claim 10, wherein the tuner comprises means to download the software over a specific terrestrial or satellite broadcasting channel when the broadcast transmitting station is a terrestrial or satellite broadcasting station.

13. The video apparatus as set forth in claim 10, wherein the controller comprises means to identify a specific channel over which the software is downloaded, in response to a signal inputted through a user interface, and to control the tuner to tune to the identified channel.

14. The video apparatus as set forth in claim 10, wherein the controller comprises means to control the tuner to sequentially tune to a plurality of valid channels so as to detect, from among the valid channels, a channel over which a transport stream containing the same information as a maker name and model name of the video apparatus, pre-stored in the memory of the video apparatus, is received, and to download software contained in the transport stream received over the detected channel to the memory.

15. The video apparatus as set forth in claim 14, wherein the controller comprises means to download the software contained in the transport stream only when a software version of the received transport stream is different from a software version pre-stored in the memory of the video apparatus.

16. The video apparatus as set forth in claim 10, further comprising a display unit arranged to display an electronic program guide (EPG) indicating at least one channel over which the software of the video apparatus is scheduled to be sent, wherein the controller is arranged to select software of a version selected by a user from the displayed EPG.

17. The video apparatus as set forth in claim 16, wherein the EPG comprises means to indicate a number of the channel over which the software of the video apparatus is scheduled to be sent, a time at which the software of the video apparatus is scheduled to be sent, and information indicating changes in the software of the video apparatus.

18. The video apparatus as set forth in any one of claims 10 to 17, comprising means to download the software in the form of at least one transport stream having a packet identifier, the packet identifier indicating a maker name, model name and software version of the video apparatus.

19. A method for performing software upgrade of a video apparatus, the method comprising:
detecting electronic program guide (EPG) information sent from a broadcast station and storing the detected EPG information in a memory of the video apparatus;
displaying a EPG based on the EPG information, the EPG indicating a channel over which software associated with operation of the video apparatus is scheduled to be sent; and
downloading, to the memory, software of a version selected by a user from the displayed EPG, and upgrading the video apparatus by executing the downloaded software.

20. The method as set forth in claim 19, comprising the EPG to indicate a number of the channel over which the software is scheduled to be sent, a time at which the software is scheduled to be sent, and information indicating changes in the software of the video apparatus.

21. The method as set forth in claim 19, wherein the detecting and storing the EPG information comprises detecting the EPG information using a packet identifier of a transport stream received from the broadcast station.

22. The method as set forth in claim 19, further comprising:
Setting a download time for the selected version of software using the displayed EPG information; and
if the downloaded time is reached, downloading the selected version of software over a channel and installing the downloaded software in the video apparatus.

23. The method as set forth in claim 22, wherein the downloading and installing the selected version of software comprises:
displaying a message asking the user whether to download and install the selected version of software, on a screen of the video apparatus; and
downloading and installing the selected version of software if a software download/install instruction is inputted from the user.

24. The method as set forth in claim 22, wherein the downloading and installing the selected version of software comprises, automatically downloading and installing the selected version of software without outputting a message asking the user whether to download and install the selected version of software, on a screen of the video apparatus.

25. A video apparatus having a software upgrade capability, comprising:
a tuner for receiving a broadcast signal having a predetermined frequency;
a memory for storing EPG information contained in the broadcast signal received by the tuner, the EPG information indicating a channel over which software of the video apparatus is scheduled to be sent;
a display unit for displaying an EPG based on the EPG information stored in the memory; and
a controller for extracting the EPG information from the broadcast signal, storing the extracted EPG information in the memory, and downloading and installing specific software selected by a user from the displayed EPG.

26. The video apparatus as set forth in claim 25, wherein the EPG information indicates a number of the channel over which the software of the video apparatus is scheduled to be sent, a time at which the software of the video apparatus is scheduled to be sent, and information showing changes in the software of the video apparatus.

27. The video apparatus as set forth in claims 25 or 26, wherein the controller comprises means to detect the EPG information using a packet identifier of a transport stream of the broadcast signal received by tuner.

28. The video apparatus as set forth in claims 25 26 or 27, wherein the controller comprises means to set a download time for the selected version of software using the displayed EPG information, and, if the download time is reached, to download the selected version of software over a channel and installs the downloaded software in the video apparatus.

29. The video apparatus as set forth in any one of claims 25 to 28, wherein the controller comprises means to display a message asking a user whether to download and install a desired version of software, on a screen of the video apparatus through the display unit, and to download and install the selected version of software if a software download/install instruction is inputted from the user.

30. The video apparatus as set forth in any one of claims 25 to 29, wherein the controller comprises means to automatically download and install a selected version of software without outputting a message asking a user whether to download and install the selected version of software, on a screen of the video apparatus.

31. A method for performing software upgrade of a video apparatus, comprising the steps of:
receiving a software upgrade instruction;
in response to the received instruction, sequentially searching a plurality of valid channels to detect, from among the valid channels, a channel over which a transport stream containing the same information as a maker name and model name of the video apparatus, pre-stored in a memory of the video apparatus, is received;
if the channel over which the transport stream containing the same information as the maker name and model name pre-stored in the memory is received is detected, downloading software contained in the transport stream received over the detected channel; and
upgrading the video apparatus with the downloaded software.

32. A video apparatus with a software upgrade function, comprising:
a tuner for receiving software of the video apparatus sent from a broadcast transmitting station;
a controller arranged to control the tuner to sequentially tune to a plurality of valid channels so as to detect, from among the valid channels, a channel over which a transport stream containing the same information as a maker name and model name of the video apparatus, pre-stored in a memory of the video apparatus, is received, and, if the channel over which the transport stream containing the same information as the maker name and model name pre-stored in the memory is received is detected, downloading software contained in the transport stream received over the detected channel to the memory; and
the memory is adapted for storing the downloaded software under control of the controller.
